# EUROPEAN PATENT SPECIFICATION

(11) **EP 3 450 153 B1**
(45) Date of publication and mention of the grant of the patent: **29.07.2020**
(21) Application number: 18191823.6
(22) Date of filing: 30.08.2018
(51) Int. Cl.: B29D 30/24, B29D 30/32

(54) **TIRE BUILDING DRUM AND METHOD OF BUILDING A TIRE**
REIFENAUFBAUTROMMEL UND VERFAHREN ZUM AUFBAUEN EINES REIFENS
TAMBOUR DE CONSTRUCTION DE PNEU ET PROCÉDÉ DE CONSTRUCTION DE PNEU

(30) Priority: 01.09.2017 US 201715693773; 01.09.2017 US 201715693776
(43) Date of publication of application: 06.03.2019
(73) Proprietor: The Goodyear Tire & Rubber Company, Akron, OH 44316 (US)
(72) Inventor: STOILA, George Michael, Tallmadge, OH 44278 (US); HOGAN, Michael James, Tallmadge, OH 44278 (US); KMIECIK, Frank Anthony, Akron, OH 44313 (US); YAO, Minwu, Stow, OH 44224 (US); MONTGOMERY, Mark John, Rootstown, OH 44272 (US); JOHNSON, Kristian Daniel, North Canton, OH 44720 (US); ANDERSON, John Edward, Atwater, OH 44201 (US); VARGO, Richard David, Cuyahoga Falls, OH 44223 (US); MORALES, Pablo Rafael, Brimfield, OH 44240 (US); ONDO, Andrew Robert, Pulaski, PA 16143 (US)
(74) Representative: Kutsch, Bernd

(56) References cited:
- US-A1- 2015 059 984
- US-A1- 2015 114 571
- US-A1- 2016 176 138

## Description

### Field of the Invention

The invention relates to building tires, and more particularly to a tire building drum for shaping tires and to a method of building tire.

### Background of the Invention

The manufacture of tires typically involves a tire building drum wherein, numerous tire components are applied to the drum in sequence, forming a cylindrical shaped tire carcass. The tire building drum may be a flat drum, unistage drum, a first stage drum or a high crown tire building drum. In either case, tire components are added onto the drum in succession in order to form a cylindrically shaped first stage green carcass. Next a shaping operation is performed to transform the cylindrical green carcass into a toroidally shaped green tire. Inherent stresses are often created in the green tire, particularly in the apex, bead area and sidewall due to the compression forces and compound strain applied to the carcass in order to transform the components into the desired toroidal shape. These inherent residual stresses can cause tire non-uniformity, poor handling and lower rolling resistance. Thus, an improved tire building process is desired that minimizes the residual tire building stresses resulting in a tire.

US-A1-2016/0176138 describes a second stage tire building drum in accordance with the preamble of claim 1.

Further tire building drums are also known from US-A1-2015/0059984 and US-A1-2015/0114571.

### Summary of the Invention

The invention relates to a tire building drum in accordance with claim 1 or 2 and to a method in accordance with claim 8.

Dependent claims refer to preferred embodiments of the invention.

One or more embodiments of the present invention provide a second stage tire building drum comprising a first and second hub, wherein each hub is mounted on a central shaft of the second stage tire building drum, wherein at least one of said hubs is configured for unconstrained axial movement on the central shaft, and wherein each hub has a bead receiving mechanism mounted on each hub.

One or more embodiments of the present invention provide a second stage tire building drum comprising a first and second hub, wherein each hub is mounted on a central shaft of the second stage tire building drum, wherein at least one of said hubs is configured for unconstrained axial movement on the central shaft, wherein each hub has a bead receiving mechanism mounted on each hub, and wherein said bead receiving mechanism includes one or more bead segments. Preferably, each bead segment has a curved pocket.

One or more embodiments of the present invention provide a second stage tire building drum comprising a first and second hub, wherein each hub is mounted on a central shaft of the second stage tire building drum, wherein at least one of said hubs is configured for unconstrained axial movement on the central shaft, wherein each hub has a bead receiving mechanism mounted on each hub, wherein the axial movement is sliding.

One or more embodiments of the present invention provide a second stage tire building drum comprising a first and second hub, wherein each hub is mounted on a central shaft of the second stage tire building drum, wherein each hub has an inner sleeve that is mounted on the central shaft, wherein each hub has a sliding sleeve mounted on the inner sleeve and configured for unconstrained axial movement relative to the inner sleeve, and wherein each hub has a bead receiving mechanism mounted on the sliding sleeve, wherein said bead receiving mechanism includes one or more bead segments, wherein each bead segment has a curved pocket.

One or more embodiments of the present invention provide a second stage tire building drum comprising a first and second hub, wherein each hub is mounted on a central shaft of the second stage tire building drum, wherein each hub has an inner sleeve that is mounted on the central shaft, wherein each hub has a sliding sleeve mounted on the inner sleeve and configured for unconstrained axial movement relative to the inner sleeve, and wherein each hub has a bead receiving mechanism mounted on the sliding sleeve, wherein said bead receiving mechanism includes one or more bead segments, wherein each bead segment has a curved pocket, wherein each inner sleeve is axially movable.

One or more embodiments of the present invention provide a second stage tire building drum comprising a first and second hub, wherein each hub is mounted on a central shaft of the second stage tire building drum, wherein each hub has an inner sleeve that is mounted on the central shaft, wherein each hub has a sliding sleeve mounted on the inner sleeve and configured for unconstrained axial movement relative to the inner sleeve, and wherein each hub has a bead receiving mechanism mounted on the sliding sleeve, wherein said bead receiving mechanism includes one or more bead segments, wherein each bead segment has a curved pocket, wherein the curved pocket is concave.

The invention provides in a first preferred aspect a second stage tire building drum comprising a first and second hub, wherein each hub is mounted on a central shaft of the second stage tire building drum; wherein each hub has an inner sleeve that is mounted on the central shaft; wherein each hub has a sliding sleeve mounted on the inner sleeve and configured for unconstrained axial sliding relative to the inner sleeve; wherein each hub has a bead receiving mechanism mounted on the sliding sleeve, wherein said bead receiving mechanism includes one or more bead segments, wherein each bead segment has a curved pocket.

One or more embodiments of the present invention provides a second stage tire building drum comprising a first and second hub, wherein each hub is mounted on a central shaft of the second stage tire building drum, wherein each hub has an inner sleeve that is mounted on the central shaft, wherein at least one of said hubs has a sliding sleeve mounted on the inner sleeve and configured for unconstrained axial movement relative to the inner sleeve and a bead receiving mechanism mounted on the sliding sleeve, wherein the other hub has a bead receiving mechanism, and wherein said bead receiving mechanism includes one or more bead segments, wherein each bead segment has a curved pocket.

The invention provides in a second preferred aspect a second stage tire building drum comprising: a first and second hub, wherein each hub is mounted on a central shaft of the second stage tire building drum; wherein each hub has an inner sleeve that is mounted on the central shaft; wherein at least one of said hubs has a sliding sleeve mounted on the inner sleeve and configured for unconstrained axial sliding relative to the inner sleeve and a bead receiving mechanism mounted on the sliding sleeve; wherein the other hub has a bead receiving mechanism; wherein said bead receiving mechanism includes one or more bead segments, wherein each bead segment has a curved pocket.

One or more embodiments of the present invention provide a method of forming a tire on a tire building drum from a green tire carcass, the method comprising the steps of applying the green tire carcass onto the tire building drum by placing a first and second bead onto a first and second bead receiving member of the tire building drum, wherein no bead locking force is utilized, and inflating the carcass into engagement with a belt and tread package while at least one of the beads is free to move axially inward. Preferably, both of the beads are free to move axially inward.

One or more embodiments of the present invention provide a method of forming a tire on a tire building drum from a green tire carcass, the method comprising the steps of applying the green tire carcass onto the tire building drum by placing a first and second bead onto a first and second bead receiving member of the tire building drum, wherein no bead locking force is utilized, and inflating the carcass into engagement with a belt and tread package while at least one of the beads is free to move axially inward, wherein at least one of the beads is slidable in the axial direction during the inflation step.

One or more embodiments of the present invention provide a method of forming a tire on a tire building drum from a green tire carcass, the method comprising the steps of applying the green tire carcass onto the tire building drum by placing a first and second bead onto a first and second bead receiving member of the tire building drum, wherein no bead locking force is utilized, and inflating the carcass into engagement with a belt and tread package while at least one of the beads is free to move axially inward, and further including the step of radially expanding a first and second bead receiving member into engagement with a respective first and second bead at a relatively low pressure.

One or more embodiments of the present invention provide a method of forming a tire on a tire building drum from a green tire carcass, the method comprising the steps of applying the green tire carcass onto the tire building drum by placing a first and second bead onto a first and second bead receiving member of the tire building drum, wherein no bead locking force is utilized, and inflating the carcass into engagement with a belt and tread package while at least one of the beads is free to move axially inward, wherein the carcass is inflated with a relatively high volume airflow such as with airflow having a flow coefficient Cv of 2 or more or with airflow having a flow coefficient Cv of 5 to 10.

One or more embodiments of the present invention provide a method of forming a tire on a tire building drum from a green tire carcass, the method comprising the steps of applying the green tire carcass onto the tire building drum by placing a first and second bead onto a first and second bead receiving member of the tire building drum, wherein no bead locking force is utilized, and inflating the carcass into engagement with a belt and tread package while at least one of the beads is free to move axially inward, and wherein the carcass in inflated with a relatively high volume airflow and/or a relatively low pressure airflow.

One or more embodiments of the present invention provide a method of forming a tire on a tire building drum comprising the steps of applying a green tire carcass onto the tire building drum by placing a first and second bead onto a first and second respective bead pocket of the tire building drum, wherein low bead locking force is utilized wherein at least one of the first and second respective bead pockets are configured for unconstrained sliding in the axial direction, and inflating the carcass into engagement with a belt and tread package while the at least one of the bead pockets is free to slide axially inward.

The invention provides in a first preferred aspect a method of building a tire carcass on a tire building drum. The method comprises the steps of: applying the green tire carcass onto the tire building drum by placing a first and second bead onto a first and second bead receiving member of the tire building drum, wherein no bead locking force is utilized; inflating the carcass into engagement with a belt and tread package while at least one of the beads is free to move axially inward.

The invention provides in a second preferred aspect a method of forming a tire on a tire building drum comprising the steps of: applying a green tire carcass onto the tire building drum by placing a first and second bead onto a first and second respective bead pocket of the tire building drum, wherein low bead locking force is utilized; wherein at least one of the first and second respective bead pockets are configured for unconstrained sliding in the axial direction; inflating the carcass into engagement with a belt and tread package while the at least one of the bead pockets is free to slide axially inward.

### Definitions

For ease of understanding this disclosure, the following items are defined:
"Apex" means an elastomeric filler located radially above the bead and interposed between the plies and the ply turn-up.
"Axial" and "axially" means the lines or directions that are parallel or aligned with the longitudinal axis of rotation of the tire building drum.
"Bead" means that part of the tire comprising an annular tensile member commonly referred to as a "bead core" wrapped by ply cords and shaped, with or without other reinforcement elements such as flippers, chippers, apexes, toe guards and chafers, to fit the design rim.
"Belt Structure" or "Reinforcing Belts" means at least one annular layer or plies of parallel cords, woven or unwoven, underlying the tread and unanchored to the bead.
"Carcass" means an unvulcanized laminate of tire ply material and other tire components cut to length suitable for splicing, or already spliced, into a cylindrical or toroidal shape. Additional components may be added to the carcass prior to its being vulcanized to create the molded tire.
"Circumferential" means lines or directions extending along the perimeter of the surface of the annular tread perpendicular to the axial direction.
"Equatorial Plane (EP)" means the plane perpendicular to the tire's axis of rotation and passing through the center of its tread.
"Radial" and "radially" mean directions radially toward or away from the axis of rotation of the tire building drum.
"Tread" means a rubber component which when bonded to a tire carcass includes that portion of the tire that come into contact with the road when the tire is normally inflated and under normal load.

### Brief Description of the Drawings

The invention will be described by way of example and with reference to the accompanying drawings in which:
Figure 1A is a front perspective view of a second stage tire building drum.
Figure 1B is a close up perspective view of the hub of the tire building drum of Figure 1A.
Figure 2 is a side view of a hub of the tire building drum shown in Fig. 1B and positioned in an axially outward position and with the bead seal removed.
Figure 3 is a side view of the hub of figure 2 shown in a axially inward position and with an optional pusher plate.
Figure 4 is a rear perspective view of the hub of Fig. 3 shown with the optional pusher plate.
Figure 5 is a cross-sectional view of the hub of Fig. 4 in the direction 5-5.
Figure 6A is a cross-sectional view of the hub of Fig. 4 in the direction 6-6.
Figure 6B is a close-up view of the bead pocket seal.
Figure 7A is a view of the hub retraction mechanism in a retracted position and Figure 7B is the hub retraction mechanism in the unretracted position.
Figure 8A is a closeup view of a bead portion of a green tire carcass mounted in the bead pocket, while Figure 8B is a close-up view of the bead of the green tire carcass. after the intended rotation of the bead area after shaping the carcass, and the bead position has moved from front of pocket to rear of pocket.
Figure 9A is a perspective view of the hub shown with the bead lock mechanism retracted, while Figure 9B illustrates the bead lock mechanism in the radially expanded position.
Figure 10 is a cross-sectional view of the green tire carcass mounted in the bead pockets of the tire drum.
Figure 11 illustrates the carcass undergoing low pressure, high volume shaping before the tread and belt package is applied.
Figure 12 illustrates the green tire carcass inflating into the belt and tread package, with the green tire carcass shown in phantom.
Figure 13 illustrates the tire formed by shaping and inflation, with the green tire carcass shown in phantom.

### Detailed Description of Example Embodiments the Invention

The invention provides a new and improved tire building drum and method that reduces the residual stresses in the green tire carcass, resulting in an improved tire. The process provides that the tire ply and components are shaped into a catenary structure. A catenary structure is a structure that has no tensile or compressive reactions at the base of the structure and has uniform strain along the length of the structure. In the case of a tire, the beads are the base of the structure and the length from the bead to the crown has uniform strain.

The tire building drum and method of the present invention allows the tire to be built into a catenary shape, producing a tire that has a bead area and sidewall made with minimal strain. The tire building drum and method allows the tire to be built so that the ply cords that have the shortest cord length which are maintained in tension, and not compression. The tire building drum and method also prevents ply cord trisomy, or the unravelling of the cords due to the cords being loaded in compression and not tension.

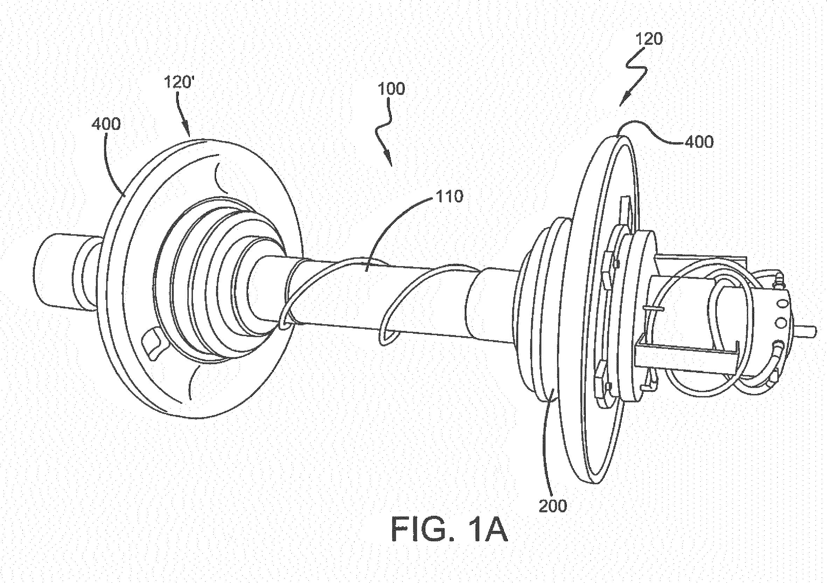

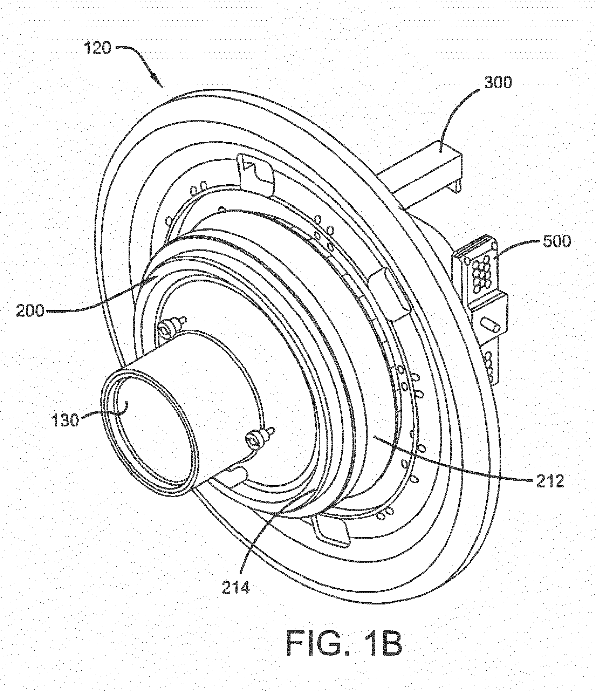

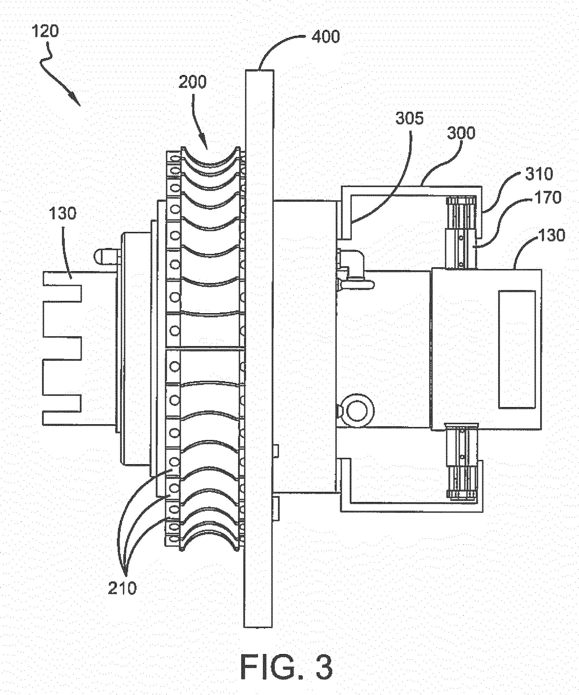

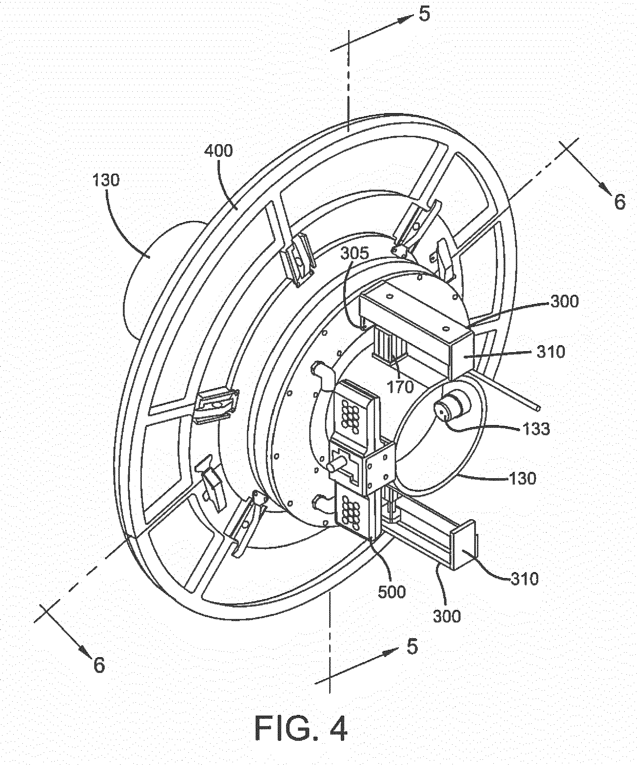

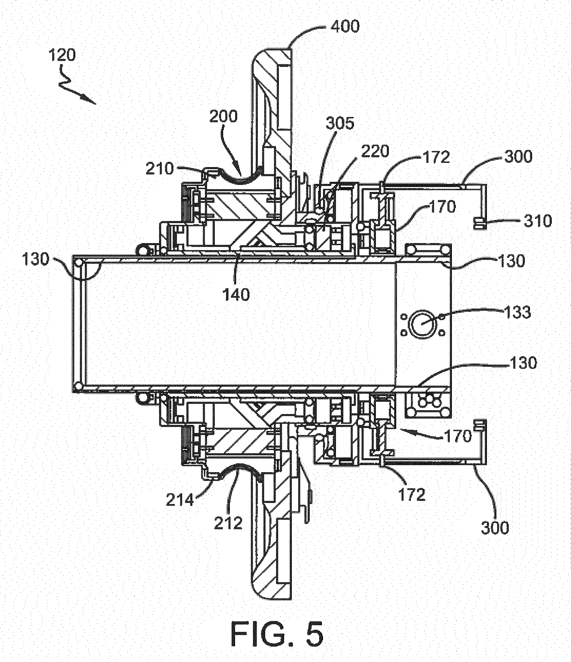

A first embodiment of a second stage tire building drum 100 of the present invention is shown in Figure 1. The tire building drum 100 has a central shaft 110 with a left hub 120' and a right hub 120 mounted on the central shaft 110. The left hub 120' is the mirror image of the right hub 120 and are otherwise mechanically identical except for the orientation. As shown in Figure 1B and Figures 2-4, each hub 120, 120' has an inner sleeve 130 that is secured to a central shaft 110 of the tire building drum. The inner sleeve 130 is connected to an internal screw (not shown) preferably with T bolts 133, so that the inner sleeve 130 may be moved in the axial direction by the internal screw. A sliding sleeve 140 is positioned over the inner sleeve 130. It is preferred that the inner sleeve 130 be bronze on steel with labyrinth grooves and glide ring seals. As shown in Figures 5-6, each sliding sleeve 140 slides axially along the inner sleeve 130 so that the hubs 120, 120' slide axially inward towards each other or axially outward from each other. The sliding sleeve 140 may be locked into an axial position by locking cylinders 170. The locking cylinders 170 are mounted on the inner sleeve 130 and have a locking member 172 positioned for engagement with retaining bracket 300. A first end 305 is secured to the sliding sleeve assembly 140. A second distal end 310 of the retaining bracket 300 functions as an axial stop when the distal end engages the locking member 172, as shown in figure 3.

Each sliding sleeve 140 further includes a bead lock mechanism 200 for receiving the bead area of the green carcass. Each bead lock mechanism 200 further includes a plurality of bead segments 210. Each bead segment 210 may optionally be expanded and contracted in a radial direction by bead actuating cylinders 220. Each bead locking mechanism 200 preferably utilizes zero or low pressure. Preferably the bead lock cylinder pressures range from zero to less than 5 bar and more preferably from zero to 2 bar. Preferably the force from the bead pockets is less than 2.07 bar over the projected area of the bead face. As distinguished from the prior art drums, exact placement of the carcass beads over the bead pockets is not required, nor is exact bead pocket location. As soon as the inflation process starts, the beads are able to pull towards the centerline of the carcass, thereby becoming centered and symmetrical to the bead pockets. As the catenary shaping of the carcass begins, the beads are freely able to move, and the carcass cord tension is very low. If the beads cannot move as in prior art drums, then the cord path is straight and horizontal, while the cord tension undesirably increases exponentially. If the bead pockets are expanded with too much force then the beads cannot move towards the inside edge of the pocket as needed and the carcass cannot become centered to the drum. Thus, the bead pocket force is preferably zero or minimal. The nonexistent or substantially reduced bead pressure is also reduced to limit bead compression and prevent cold forging of the toe guard and chafer under the bead sole.

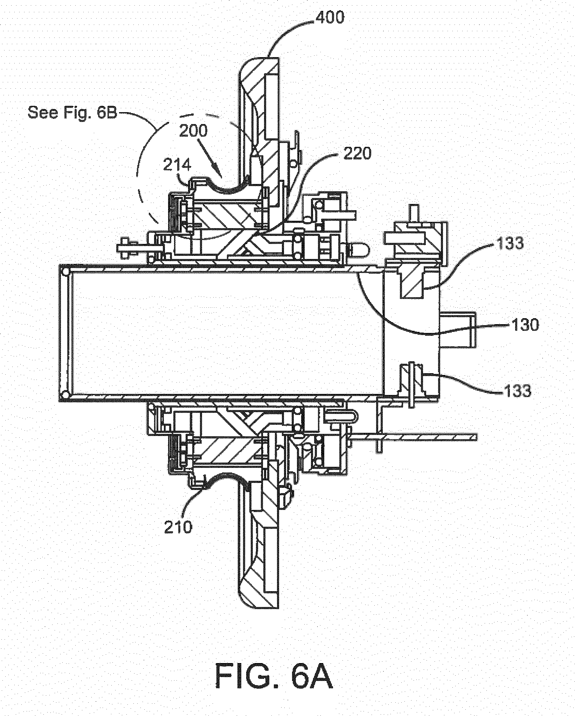

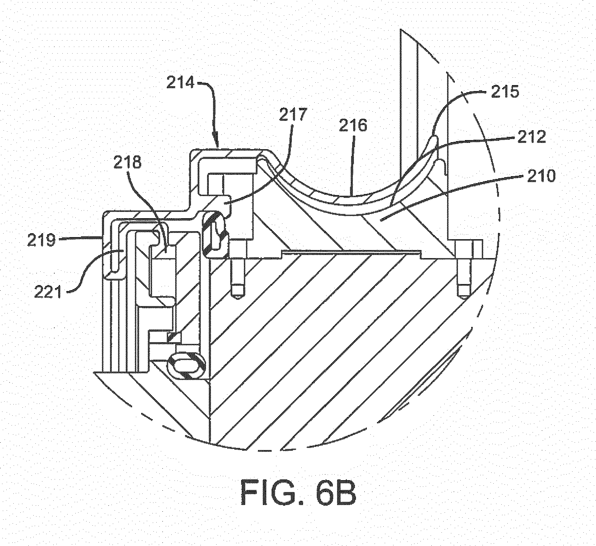

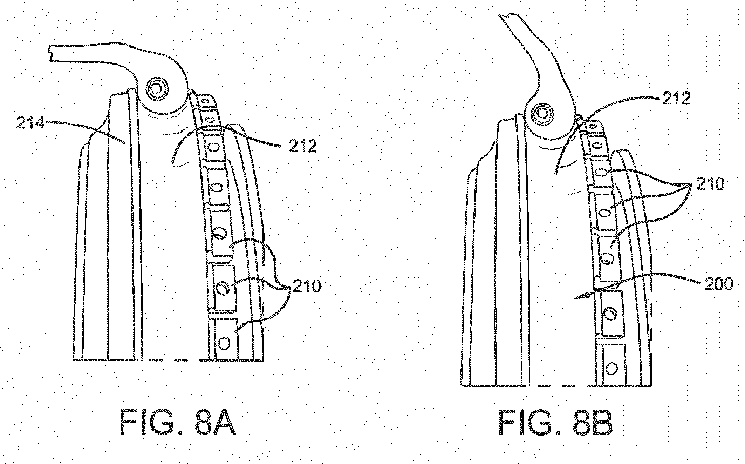

As shown in Figure 5, each bead segment 210 has a curved or concave pocket 212 that facilitates rotation of the bead area of the tire during shaping. Each curved pocket 212 gently holds and supports the bead without the need of any bead lock force, although low bead lock force can be used. The curved pockets 212 allow the tire to rotate around the bead cable so that the tire down ply is put into tension and the apex is positioned at the cured ply line angle. Figure 8A illustrates the bead positioned in the curved pocket 212, showing the initial bead position prior to shaping. Figure 8B illustrates the bead position in the curved pocket 212 after shaping. The curved pocket 212 may be symmetrical or asymmetrical in shape. A flexible annular seal 214 is seated over the pocket 212. As shown in Figures 6A and 6B, the flexible seal 214 has a first end 218 that is secured to the housing of the bead pocket. The seal 214 has overlapping portions 219 and 221. The seal further includes a foot 217 that is received within a groove of the housing. The seal has a curved portion 216 that is seated in the pocket 212. The seal terminates in a free end 215. The free end is not secured, and floats, resulting in good sealing with no large forces required by the bead lock cylinder to open the bead pockets and overcome the seal restrictive forces.

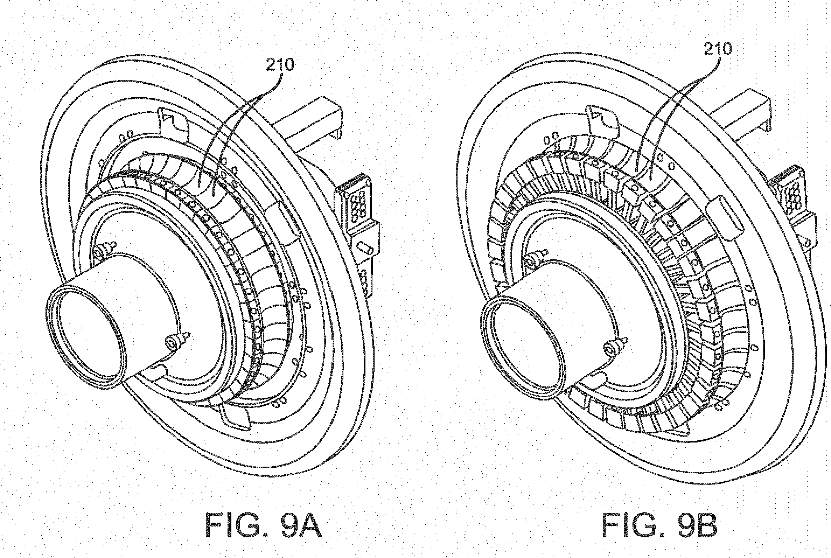

Figure 9A illustrates the bead segments in the retracted position, while Figure 9B illustrates the bead segments in their radially expanded position.

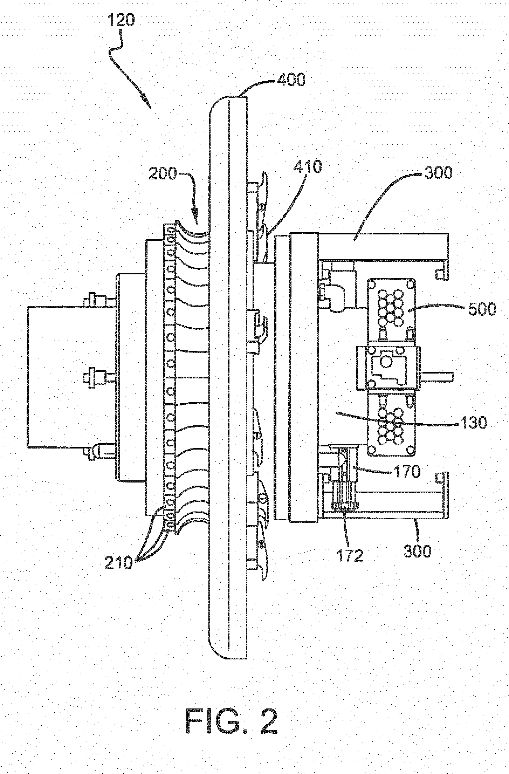

Figures 1-6 illustrate that the hubs 120 may further include an optional shaping plate 400. The optional shaping plate 400 is received in support brackets 410, as shown in Fig 2. The optional shaping plate 400 may assist the shaping process by engaging the mid sidewall of the tire during the shaping process. The air pressure in the cylinder mover for shaping plate 400 can be variably controlled.

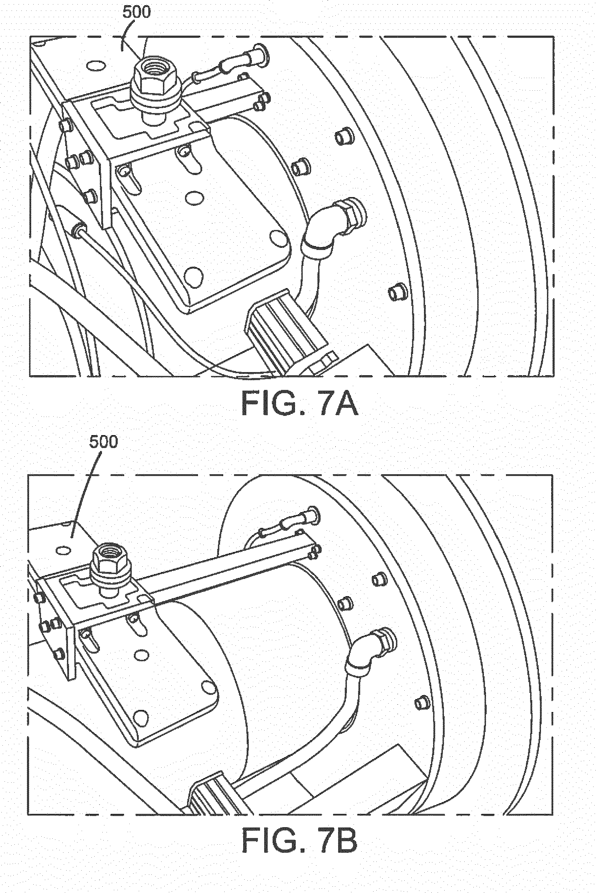

Figures 7A illustrates a retraction mechanism 500 that is useful to reposition the sliding sleeve in the desired axial location. The retraction mechanism 500 includes a chain attached to the sliding sleeve to slide the sleeve into the home or start position. The retraction mechanism 500 is mounted on the stationary sleeve housing 130.

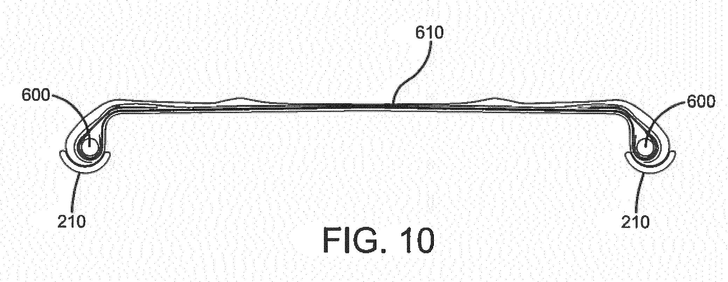

The first step of the catenary method of building tires begins with the tire building drum located in the start position as shown in Figure 1. The sliding sleeve 140 is locked to the inner stationary sleeve 130. A cylindrically shaped green tire carcass 610 is mounted on the bead mechanisms 200 on each hub 120, so that a respective bead area 600 is received in the bead pocket 210 of a respective hub, as shown in Figure 9 and Fig 10.

The bead locking mechanisms 200 may optionally be radially expanded to exert a low-pressure force on the beads. As distinguished from the prior art drums, exact placement of the carcass beads over the bead pockets is not required, nor is exact bead pocket location. As soon as the inflation process starts, the beads are able to pull towards the centerline of the carcass, thereby becoming centered and symmetrical to the bead pockets. As the catenary shaping of the carcass begins, the beads are freely able to move, and the carcass cord tension is very low. If the beads cannot move as in prior art drums, then the cord path is straight and horizontal, while the cord tension undesirably increases exponentially. If the bead pockets are expanded with too much force then the beads cannot move towards the inside edge of the pocket as needed and the carcass cannot become centered to the drum. Thus, the bead pocket force is preferably zero or minimal.

After the green tire carcass is loaded, the next step is to shape the green carcass using the catenary shaping process of the invention. As the tire drum rotates, the green carcass 610 is slowly inflated using low pressure, high volume shaping air. The locking member 172 is unlocked from the retaining member 300, allowing the sliding sleeve 140 to freely slide axially inward towards the adjacent hub. During inflation, the carcass cord tension is maintained at a low tension due to the evolvement of the catenary shape and the free sliding movement of the beads mounted on the sliding sleeves, which are each free to move in the axial direction. The shaping air pressure is very low at the level needed to gently strain and overcome the carcass composite stiffness. The carcass is self-shaping itself to the balanced catenary shape. Thus, each sliding sleeve is free to move in the axial direction towards the other sliding sleeve so that the tire is shaped by the tension of the ply cords as shown in Figure 10. Typically, each sliding sleeve may axially slide in the range of 152.4 mm to 254 mm. The shape of the bead pocket segments allow the tire bead area to rotate during shaping without the need for high bead clamping forces. The bead lock forces can be zero or be minimal.

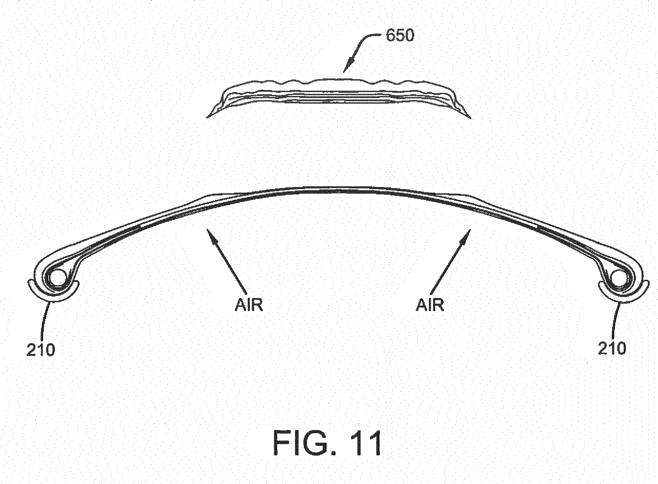

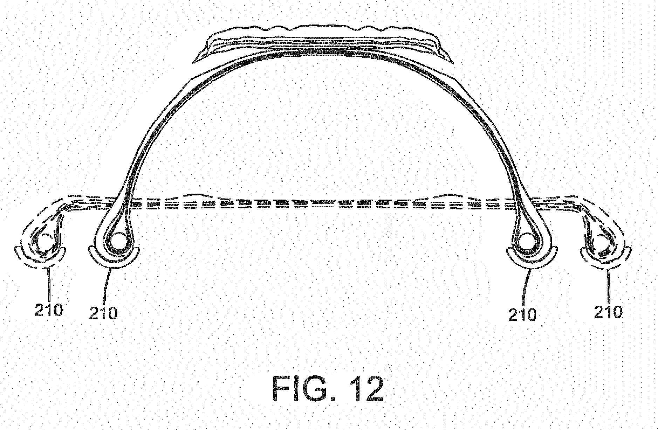

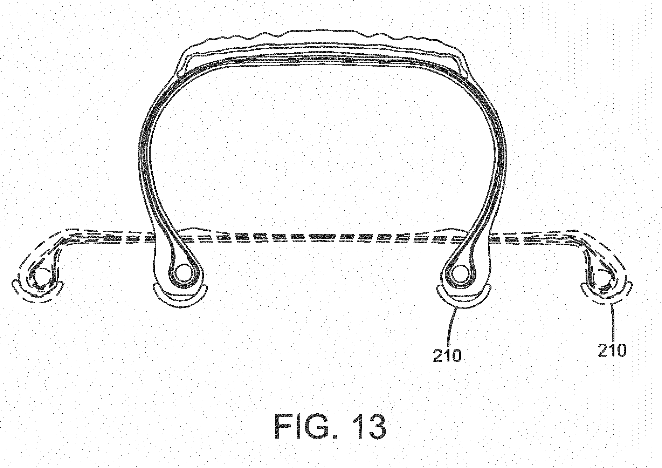

The assembled belt and tread package 650 is positioned over the inflating carcass 600 as shown in Fig. 11. The carcass 600 expands into the assembled belt and tread package 650 as shown in Figure 12. The carcass is inflated using high volume, low pressure air. The pressure preferably does not exceed 280 mbar and is preferably in the range of from 210 to 280 mbar. The flow rate is increased from prior art process so that the system flow coefficient Cv rate is preferably about 10. After the tire is approximately 80% of the desired shape, the carcass will be stabilized in the catenary shape such that the beads are without any horizontal reaction, and the sidewall and bead are at the inflection point of direction reversal, and the carcass centerline has contacted the belt and tread package centerline. One the carcass has been stabilized in the catenary shape, then the hubs are then locked to the drive mechanism and slowly moved axially inward using the screw until the desired axial width of the tire is achieved and the apex is approximately at the cured ply line angle. Next, the tread and shoulder area is stitched to the carcass using low stitching pressure (not shown). The pressure in the carcass is in the range of 350 to 800 mbar, more preferably in the range of from 500 to 700mbar. The stitcher cylinder pressure (not shown) is adjusted to not overly deform the carcass, using low pressure, starting at the center of the tread and stitching the tread in a circumferential manner, shifting axially outward from the center of the tire. The stitcher also stitches the tread shoulder interface and shoulder area. The completed tire is shown in Figure 13, and the initial green tire carcass is shown in phantom.

Then the tire is removed from the tire building drum completing the process. The green tire is then cured in a conventional mold.

In an alternate embodiment of the invention, only one of the hubs has a sliding sleeve.

In an alternate embodiment of the invention, one of the hubs does not move in the axial direction and has no sliding sleeve.

The advantage of the catenary shaping process is that it does not produce any "ply pull through" into the squeegee and inner liner. The catenary shaping process allows the beads to move as need and the low bead locking force allow the rotation of the cable bead outer lang wire around the core wires of the cable bead. The plies then tacked to the outer lang wire are free to rotate along with the outer lang wires. There is no elastic energy in the outer lang wire when the wire is rotated so the ending rotational angle of the bead carcass elements is saved. Another advantage to the catenary shaping process is the tire is the carcass is shaped on a "pneumatic core" to within approximately 4 % of the final molded shape, closely approximating a tire that has been made on a core.

## Claims

1. A second stage tire building drum, the drum (100) comprising:
a first and second hub (120, 120'), wherein each hub is mounted on a central shaft (110) of the second stage tire building drum (100);
wherein each hub (120, 120') has a bead receiving mechanism mounted on each hub;
**characterized in that** at least one of said hubs (120, 120') is configured for unconstrained axial movement on the central shaft (110).

2. A second stage tire building drum comprising a first and second hub (120, 120'), wherein each hub is mounted on a central shaft (110) of the second stage tire building drum (100) and each hub has an inner sleeve (130) that is mounted on the central shaft; wherein
(i) each hub (120, 120') has a sliding sleeve (140) mounted on the inner sleeve (130) and configured for unconstrained axial movement relative to the inner sleeve, and each hub (120, 120') has a bead receiving mechanism mounted on the sliding sleeve (140), or
(ii) at least one of said hubs (120, 120') has a sliding sleeve (140) mounted on the inner sleeve (130) and configured for unconstrained axial movement relative to the inner sleeve and a bead receiving mechanism mounted on the sliding sleeve (140), and the other hub has a bead receiving mechanism;
and wherein at least one or all of the bead receiving mechanisms includes one or more bead segments (210), each bead segment having a curved pocket (212).

3. The second stage tire building drum of claim 1 wherein said bead receiving mechanism includes one or more bead segments (210).

4. The second stage tire building drum of claim 2 wherein each bead segment (210) has a curved pocket (212).

5. The second stage tire building drum of claim 1, 3 or 4 wherein the axial movement is sliding.

6. The second stage tire building drum of claim 2 wherein each inner sleeve (130) is axially movable.

7. The second stage tire building drum of at least one of the previous claims wherein the curved pocket (212) is concave.

8. A method of forming a tire on the tire building drum (100) according to any of claims 1-7, from a green tire carcass (600), the method comprising the steps of:
(i) applying a green tire carcass (600) onto the tire building drum (100) by placing a first and second bead onto a first and second respective bead receiving member of the tire building drum, wherein no bead locking force is utilized; or
(ii) applying a green tire carcass (600) onto the tire building drum (100) by placing a first and second bead onto a first and second respective bead pocket (212) of the tire building drum (100), wherein preferably a relatively low bead locking force is utilized, and wherein at least one of the first and second respective bead pockets (212) are configured for unconstrained sliding in the axial direction;
and inflating the carcass (600) into engagement with a belt and tread package (650) while at least one of the beads is free to move axially inward.

9. The method of claim 8 wherein both of the beads are free to move axially inward.

10. The method of claim 8 or 9 wherein at least one of the beads is slidable in the axial direction during the inflation step.

11. The method of at least one of the claims 8 to 10 further including the step of radially expanding a first and second bead receiving member into engagement with a respective first and second bead at a relatively low pressure.

12. The method of claim 8 wherein the carcass is inflated with airflow having a flow coefficient Cv of 2 or more or in a range of from 5 to 10.

13. The method of claim 8 or 12 wherein the carcass in inflated with a relatively high volume airflow.

14. The method of claim 8, 12 or 13 wherein the carcass in inflated with low pressure airflow, preferably a with pressure of not more than 280 mbar or in a range of from 210 to 280 mbar.

15. The method of at least one of the previous claims 8 to 14 wherein the relatively low bead locking force is a force corresponding to a pressure of less than 5 bar, preferably less than 2.07 bar or from 0 bar to 2 bar, over the projected area of the bead face.

## Patentansprüche

1. Reifenaufbautrommel der zweiten Stufe, wobei die Trommel (100) Folgendes umfasst:
eine erste und zweite Nabe (120, 120'), wobei jede Nabe auf einer zentralen Welle (110) der Reifenaufbautrommel (100) der zweiten Stufe montiert ist;
wobei jede Nabe (120, 120') einen Wulstaufnahmemechanismus aufweist, der an jeder Nabe montiert ist;
**dadurch gekennzeichnet, dass** wenigstens eine der Naben (120, 120') für eine uneingeschränkte axiale Bewegung auf der zentralen Welle (110) konfiguriert ist.

2. Reifenaufbautrommel der zweiten Stufe, die eine erste und eine zweite Nabe (120, 120') umfasst, wobei jede Nabe auf einer zentralen Welle (110) der Reifenaufbautrommel (100) der zweiten Stufe montiert ist und jede Nabe eine Innenhülse (130) aufweist, die auf der zentralen Welle montiert ist;
wobei
(i) jede Nabe (120, 120') eine Gleithülse (140) aufweist, die an der Innenhülse (130) montiert ist und für die uneingeschränkte axiale Bewegung relativ zu der Innenhülse konfiguriert ist, und jede Nabe (120, 120') einen Wulstaufnahmemechanismus aufweist, der an der Gleithülse (140) montiert ist, oder
(ii) wenigstens eine der Naben (120, 120') eine Gleithülse (140), die an der Innenhülse (130) montiert ist und für die uneingeschränkte axiale Bewegung relativ zu der Innenhülse konfiguriert ist, und einen Wulstaufnahmemechanismus aufweist, der auf der Gleithülse (140) montiert ist, und wobei die andere Nabe einen Wulstaufnahmemechanismus aufweist; und
wobei wenigstens einer oder alle der Wulstaufnahmemechanismen ein oder mehrere Wulstsegmente (210) einschließen, wobei jedes Wulstsegment eine gekrümmte Aussparung (212) aufweist.

3. Reifenaufbautrommel der zweiten Stufe nach Anspruch 1, wobei der Wulstaufnahmemechanismus ein oder mehrere Wulstsegmente (210) einschließt.

4. Reifenaufbautrommel der zweiten Stufe nach Anspruch 2, wobei jedes Wulstsegment (210) eine gekrümmte Aussparung (212) aufweist.

5. Reifenaufbautrommel der zweiten Stufe nach Anspruch 1, 3 oder 4, wobei die axiale Bewegung ein Gleiten ist.

6. Reifenaufbautrommel der zweiten Stufe nach Anspruch 2, wobei jede Innenhülse (130) axial beweglich ist.

7. Reifenaufbautrommel der zweiten Stufe nach wenigstens einem der vorhergehenden Ansprüche, wobei die gekrümmte Aussparung (212) konkav ist.

8. Verfahren zum Ausbilden eines Reifens auf der Reifenaufbautrommel (100) nach einem der Ansprüche 1-7, aus einer Reifenrohlingskarkasse (600), wobei das Verfahren die folgenden Schritte umfasst:
(i) Aufbringen einer Reifenrohlingskarkasse (600) auf die Reifenaufbautrommel (100) durch Platzieren eines ersten und eines zweiten Wulstes auf einem ersten oder zweiten jeweiligen Wulstaufnahmeelement der Reifenaufbautrommel, wobei keine Wulstverriegelungskraft genutzt wird; oder
(ii) Aufbringen einer Reifenrohlingskarkasse (600) auf die Reifenaufbautrommel (100) durch Platzieren eines ersten und eines zweiten Wulstes auf einer ersten oder einer zweiten jeweiligen Wulstaussparung (212) der Reifenaufbautrommel (100), wobei vorzugsweise eine relativ geringe Wulstverriegelungskraft genutzt wird, und wobei die erste und/oder die zweite jeweilige Wulstaussparung (212) für ein uneingeschränktes Gleiten in der axialen Richtung konfiguriert ist; und
Füllen der Karkasse (600) in Eingriff mit einem Gürtel- und Laufflächenpaket (650), während wenigstens einer der Wülste sich axial nach innen frei bewegen kann.

9. Verfahren nach Anspruch 8, wobei beide der Wülste sich axial nach innen frei bewegen können.

10. Verfahren nach Anspruch 8 oder 9, wobei wenigstens einer der Wülste während des Füllungsschritts in die axiale Richtung gleiten kann.

11. Verfahren nach wenigstens einem der Ansprüche 8 bis 10, das ferner den Schritt des radialen Ausdehnens eines ersten und eines zweiten Wulstaufnahmeelements in Eingriff mit einem jeweiligen ersten und zweiten Wulstes bei einem relativ niedrigen Druck einschließt.

12. Verfahren nach Anspruch 8, wobei die Karkasse mit einem Luftstrom gefüllt wird, der einen Durchflusskoeffizienten Cv von wenigstens 2 oder in einem Bereich von 5 bis 10 aufweist.

13. Verfahren nach Anspruch 8 oder 12, wobei die Karkasse mit einem relativ großvolumigen Luftstrom gefüllt wird.

14. Verfahren nach Anspruch 8, 12 oder 13, wobei die Karkasse mit Niederdruckluftstrom, vorzugsweise mit einem Druck von nicht mehr als 280 mbar oder in einem Bereich von 210 bis 280 mbar, gefüllt wird.

15. Verfahren nach wenigstens einem der vorhergehenden Ansprüche 8 bis 14, wobei die relativ geringe Wulstverriegelungskraft eine Kraft ist, die einem Druck von weniger als 5 bar, vorzugsweise weniger als 2,07 bar oder von 0 bar bis 2 bar, über dem herausragenden Bereich der Wulstfläche, entspricht.

## Revendications

1. Tambour de confection de bandage pneumatique de deuxième stade, le tambour (100) comprenant :
un premier et un deuxième moyeu (120, 120') ; dans lequel chaque moyeu est monté sur un arbre central (110) du tambour de confection de bandage pneumatique de deuxième stade (100) ;
dans lequel chaque moyeu (120, 120') possède un mécanisme de réception de talon monté sur chaque moyeu ;
**caractérisé en ce qu'**au moins un desdits moyeux (120, 120') est configuré pour effectuer un mouvement axial non restreint sur l'arbre central (110).

2. Tambour de confection de bandage pneumatique de deuxième stade comprenant un premier et un deuxième moyeu (120, 120') ; dans lequel chaque moyeu est monté sur un arbre central (110) du tambour de confection de bandage pneumatique de deuxième stade (100) et chaque moyeu possède un manchon interne (130) qui est monté sur l'arbre central ; dans lequel
(i) chaque moyeu (120, 120') possède un manchon coulissant (140) monté sur le manchon interne (130) et configuré pour effectuer un mouvement axial non restreint par rapport au manchon interne, et chaque moyeu (120, 120') possède un mécanisme de réception de talon monté sur le manchon coulissant (140) ; ou
(ii) au moins un moyeu parmi lesdits moyeux (120, 120') possède un manchon coulissant (140) monté sur le manchon interne (130) et configuré pour effectuer un mouvement axial non restreint par rapport au manchon interne et un mécanisme de réception de talon monté sur le manchon coulissant (140), et l'autre moyeu possède un mécanisme de réception de talon ;
et dans lequel au moins un des mécanismes de réception de talons ou la totalité de ces derniers englobe un ou plusieurs segments de talons (210), chaque segment de talon possédant une poche (212) de forme courbe.

3. Tambour de confection de bandage pneumatique de deuxième stade selon la revendication 1, dans lequel ledit mécanisme de réception de talon englobe un ou plusieurs segments de talons (210).

4. Tambour de confection de bandage pneumatique de deuxième stade selon la revendication 2, dans lequel chaque segment de talon (210) possède une poche (212) de forme courbe.

5. Tambour de confection de bandage pneumatique de deuxième stade selon la revendication 1, 3 ou 4, dans lequel le mouvement axial est un mouvement de coulissement.

6. Tambour de confection de bandage pneumatique de deuxième stade selon la revendication 2, dans lequel chaque manchon interne (130) est mobile dans la direction axiale.

7. Tambour de confection de bandage pneumatique de deuxième stade selon au moins une des revendications précédentes, dans lequel la poche de forme courbe (212) est concave.

8. Procédé de confection d'un bandage pneumatique sur un tambour de confection de bandage pneumatique (100) selon l'une quelconque des revendications 1 à 7, le procédé comprenant les étapes dans lesquelles :
(i) on applique une carcasse de bandage pneumatique non vulcanisée (600) sur le tambour de confection de bandage pneumatique (100), en plaçant un premier et un deuxième talon sur un premier et un deuxième élément respectif de réception de talon ; dans lequel on n'utilise aucune force de verrouillage de talon ; ou
(ii) on applique une carcasse de bandage pneumatique non vulcanisée (600) sur le tambour de confection de bandage pneumatique (100), en plaçant une première et une deuxième poche de talon respective (212) du tambour de confection de bandage pneumatique (100) ; dans lequel, de préférence, on utilise une force de verrouillage de talon relativement peu élevée ; et dans lequel au moins une desdites première et deuxième poches de talon respectives (212) est configurée pour effectuer un coulissement non restreint dans la direction axiale ;
et on gonfle la carcasse (600) dans le but de l'amener en contact avec un ensemble de ceinture et de bande de roulement (650), tandis qu'au moins un des talons est libre de se déplacer vers l'intérieur dans la direction axiale.

9. Procédé selon la revendication 8, dans lequel les deux talons sont libres de se déplacer vers l'intérieur dans la direction axiale.

10. Procédé selon la revendication 8 ou 9, dans lequel au moins un des talons est capable de coulisser dans la direction axiale au cours de l'étape de gonflage.

11. Procédé selon au moins une des revendications 8 ou 10, englobant en outre l'étape dans laquelle on élargit dans la direction radiale un premier et un deuxième élément de réception de talon afin de les amener en contact avec un premier et un deuxième talon respectifs dans des conditions de pression relativement peu élevée.

12. Procédé selon la revendication 8, dans lequel on gonfle la carcasse avec un flux d'air qui possède un coefficient d'écoulement Cv qui s'élève à 2 ou plus ou qui se situe dans une plage de 5 à 10.

13. Procédé selon la revendication 8 ou 12, dans lequel on gonfle la carcasse en utilisant un flux d'air possédant un volume relativement élevé.

14. Procédé selon la revendication 8, 12 ou 13, dans lequel on gonfle la carcasse avec un flux d'air que l'on soumet à une basse pression, de préférence à une pression qui n'est pas supérieure à 280 mbar ou qui se situe dans une plage de 210 à 280 mbar.

15. Procédé selon au moins une des revendications précédentes 8 à 14, dans lequel la force de verrouillage de talon relativement faible représente une force qui correspond à une pression inférieure à 5 bar, de préférence inférieure à 2,07 bar, ou à une pression de 0 à 2 bar, sur la surface projetée de la face de talon.
